# FASCICULE DE BREVET EUROPEEN

(11) **EP 0 574 302 B1**
(45) Date de publication et mention de la délivrance du brevet: **01.09.1999**
(21) Numéro de dépôt: 93401458.0
(22) Date de dépôt: 08.06.1993
(51) Int. Cl.: G06F 9/44

(54) **Dispositif de conception de réseaux de commande d'informations pour la modélisation de processus**
Vorrichtung zum Entwurf von Informationskontrollnetzen für Prozessmodellierung
Apparatus for design of information control nets for process modelling

(30) Priorité: 09.06.1992 FR 9206932
(43) Date de publication de la demande: 15.12.1993
(73) Titulaire: BULL S.A., 78430 Louveciennes (FR)
(72) Inventeur: Marcus, Michel, F-94400 Vitry (FR)
(74) Mandataire: Colombe, Michel

(56) Documents cités:
- SOFTWARE PRACTICE & EXPERIENCE. vol. 21, no. 8, Août 1991, CHICHESTER, GB pages 823 - 844 M. BALDASSARI ET AL. 'PROTOB: AN OBJECT-ORIENTED CASE TOOL FOR MODELLING AND PROTOTYPING DISTRIBUTED SYSTEMS'
- JOURNAL OF PARALLEL AND DISTRIBUTED COMPUTING. vol. 9, no. 2, Juin 1990, DULUTH, MN, US pages 128 - 137 V.Y. SHEN ET AL. 'VERDI: A VISUAL ENVIRONMENT FOR DESIGNING DISTRIBUTED SYSTEMS'

## Description

La présente invention concerne un dispositif de conception de réseaux de commande d'informations pour la modélisation de tous processus en vue de son utilisation sur un système de traitement transactionnel entre un serveur informatique et une pluralité de stations de travail.

Un premier but de l'invention est de proposer un dispositif de conception de réseaux de commande d'informations qui soit simple à mettre en oeuvre et qui permette à l'utilisateur de modéliser aisément tous processus quel que soit le type de processus.

Ce but est atteint par le fait que le dispositif de conception de réseaux de commande d'informations pour la modélisation de tous processus tel que défini dans la revendication 1 est caractérisé en ce que le modèle considère le processus comme un jeu de procédures indépendantes, composées d'objets représentés par des symboles graphiques et accompagnés d'attributs textuels et de liens entre ces objets et des informations, qui sont représentées sous forme de graphes destinés à être manipulés de façon interactive sur un écran graphique d'une station de travail, et les objets sont constitués d'activités, de branchements, ET-SOURCE, OU-SOURCE desquelles partent au moins deux activités, de branchement ET-PUITS, OU-PUITS où aboutissent au moins deux activités.

Selon une particularité les attributs sont le nom de l'acteur précisant une identité relative à la personne ou à l'entité qui accomplit l'activité, le nom de l'activité, le nom du type ou du lieu de stockage de l'information (réceptacle), la fréquence moyenne d'utilisation lorsqu'il y a un choix à faire entre plusieurs segments d'activités, le délai de réalisation correspondant à chaque activité, un délai représentant l'intervalle minimum qui doit s'écouler entre deux interventions successives de la même activité.

Selon une autre particularité les informations sont représentées par des réceptacles qui peuvent être un fichier, un document, un message et sont reliées aux activités par une liaison représentée par des arcs pointillés.

Selon une autre particularité, le réceptacle associé à un message est un losange.

Selon une autre particularité, le réceptacle associé à un fichier est un parallélogramme.

Selon une autre particularité, le réceptacle associé à un document est un carré.

Selon une autre particularité, un branchement ET-SOURCE est destiné à lancer au moins deux activités en parallèle à condition que l'activité précédent le branchement ET-SOURCE soit terminée.

Selon une autre particularité, un branchement ET-PUITS est destiné à attendre que toutes les activités précédent le branchement ET-PUITS soient accomplies pour passer à l'activité suivante.

Selon une autre particularité, un branchement OU-SOURCE est destiné à avancer une des au moins deux activités possibles selon le choix effectué.

Selon une autre particularité, un branchement OU-PUIT est destiné à lancer l'activité suivante si l'une quelconque des au moins deux activités parallèles précédentes a été accomplie.

Selon une autre particularité, ce dispositif comprend des moyens d'élaborer le modèle constitué par des fonctions "Dessiner" pour dessiner un graphe, "Modifier" pour transformer le graphe et "Texte" pour introduire les informations et les attributs textuels.

Selon une autre particularité, ce dispositif comprend des moyens de lancer une simulation d'un traitement de processus.

Selon une autre particularité, la fonction "Dessiner" permet d'appeler les commandes :
- "ACTIVITE" assurant le dessin d'une activité, "ET" pour dessiner un symbole graphique représentant un "ET" ; "OU" pour dessiner un symbole graphique représentant un "OU" ; "ARC" pour dessiner les flux d'enchaînement d'activités et de contrôle, ainsi que les flux représentant les circulations d'informations entre les différents réceptacles,
- "DOCUMENT" pour représenter un réceptacle du type "document" en entrée ou en sortie d'une activité ;
- "FICHIER" pour représenter un réceptacle du type "fichier" en entrée ou en sortie d'une activité ;
- "MESSAGE" pour représenter un réceptacle du type "message" en entrée ou en sortie d'une activité ;
- "TEXTE REDIGER" pour introduire le numéro, le nom des activités ou des réceptacles ainsi que les valeurs de durée et d'intervalle d'une activité ou les fréquences relatives en pourcentage sur chaque flux de contrôle après un "OU-SOURCE".

Selon une autre particularité, la fonction "MODIFIER" permet d'appeler :
- une commande "COUDER" pour couder un arc déjà dessiné,
- une commande "REDRESSER" pour redresser un arc déjà coudé,
- une commande "+ ACTIVITE" pour introduire une ACTIVITE supplémentaire sur le chemin d'un arc,
- une commande "+ ET" pour introduire un ET supplémentaire sur le chemin d'un arc déjà existant,
- une commande "+ OU" pour introduire un OU supplémentaire sur le chemin d'un arc déjà existant,
- une commande "- ROND" pour retirer une ACTIVITE, un OU, ou un ET, et pour reconstruire un arc.

Selon une autre particularité, la fonction "SIMULATION" permet :
- par la sélection de la commande "LANCER" de commencer une simulation après la détermination d'un certains nombres de paramètres,

Selon une autre particularité, la fonction "SIMULATION" permet :
- par la sélection de la commande "FIN" d'arrêter une simulation en cours et d'appeler un historique,

Selon une autre particularité, la fonction "SIMULATION" permet :
- par la sélection de la commande "MARCHE/ARRET" d'interrompre temporairement une simulation en cours pour en visualiser les statistiques au moment de l'interruption et la reprendre au point où elle a été arrêtée.

Selon une autre particularité, la commande "LANCER" permet de fixer les paramètres concernant :
- l'unité élémentaire de temps intervenant dans la vitesse de déroulement de la simulation,
- la fréquence d'entrée des jetons symbolisant l'avancement des activités,
- le choix de l'avancement des jetons par paquet ou individuellement.

Selon une autre particularité, la commande "LANCER" permet de fixer les paramètres concernant le nombre maximum de jetons utilisé pour la simulation.

Selon une autre particularité, la commande "MARCHE/ARRET" permet de visualiser le temps écoulé ; le nombre de jetons entrés ; le nombre de jetons sortis ; le nombre de jetons dans la procédure ; le temps minimum pour traverser la procédure.

Un autre but de l'invention est de proposer une utilisation du dispositif dans un système de traitement de transactions entre un serveur informatique et au moins une station de travail.

Ce but est atteint par le fait que les fonctions "ACTIVITE", "ET", "OU", "ARC", "FICHIER", "MESSAGE", "TEXTE" permettent de documenter les tables ORGA-ACTOR, ORGA-ROLE, ORGA-R-OFF-ACT, et JDV-PDDEF du système de traitement transactionnel entre un serveur informatique et au moins une station de travail entre lesquelles les activités constituant les procédures sont exécutées par le système comportant du côté serveur un module ordonnanceur des tâches et des ouvrages associés aux activités, un module répartiteur pour effectuer la répartition des tâches, un module signaleur pour conserver une trace des événements rythmés et recevant des informations de l'ordonnanceur et d'un module coordinateur, une boite de messages échangeant des signaux d'une part avec le module répartiteur et signaleur et d'autre part avec un module de communication avec au moins la station de travail et un module de gestion des données du flux de travail, le système comportant du coté station de travail une couche de communication, une couche de gestion des messages correspondant à un flux de travail, une couche comportant différents jeux d'interface de programmation de l'application, une couche de services de gestion et une couche d'interface utilisateur.

D'autres particularités et avantages de la présente invention apparaitront plus clairement à la lecture de la description ci-après faite en référence aux dessins annexés dans lesquels :

La figure 1 représente une vue des informations affichées à l'écran d'une station de travail utilisant le dispositif de conception de réseaux de commande d'informations selon l'invention.

La figure 2 représente une vue de l'écran de la station lorsque l'utilisateur souhaite préciser les activités.

La figure 3 représente une vue de l'écran de la station lorsque l'utilisateur fait exécuter une simulation du processus.

La figure 4 représente l'écran qui permet d'introduire les paramètres en vue d'une simulation.

La figure 5 représente un deuxième exemple de paramètre introduit en vue d'une simulation.

La figure 6 représente l'affichage de l'historique sur l'écran de la station de travail.

La figure 7 représente un système de traitement transactionnel entre un serveur et au moins une station de travail dans lequel le dispositif de conception de réseaux de commande pour modélisation de processus est utilisé.

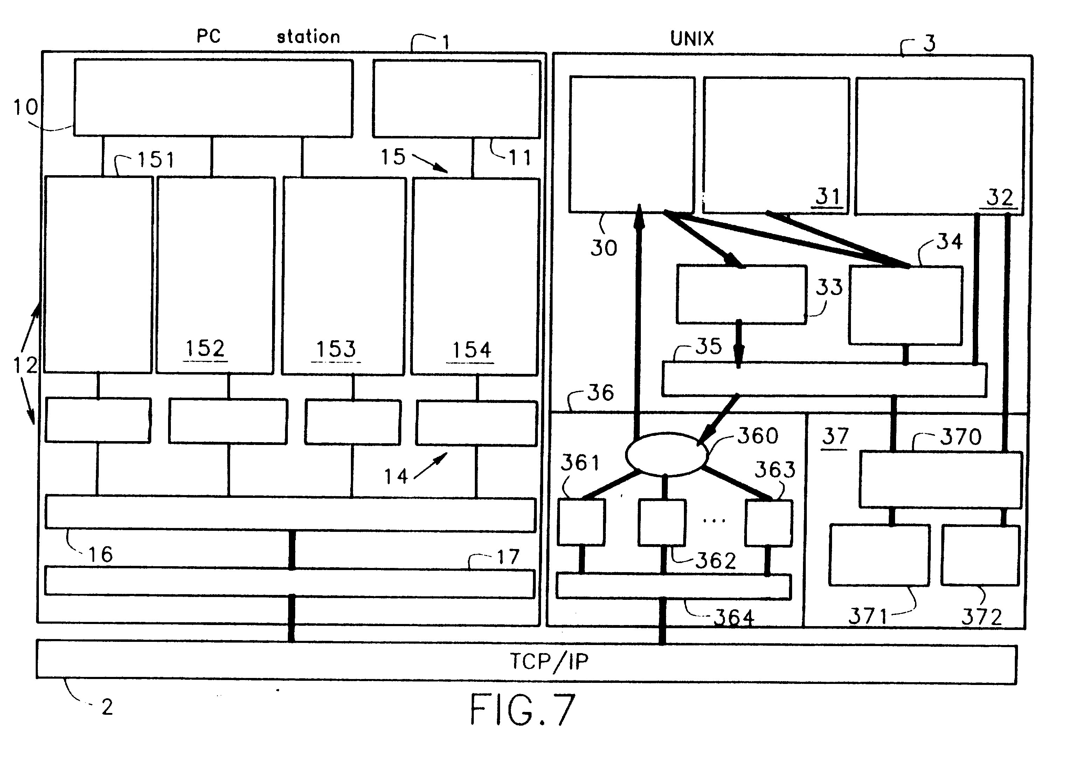

Le serveur (3) de la figure 7 comporte un jeu de modules (30 à 37) qui initialise et coordonne les activités. Par activité on doit entendre le corps d'une étape de travail, d'une procédure, c'est à dire une unité de base de travail qui doit être un jeu séquentiel d'actions primitives exécutées par un seul acteur.

Les activités peuvent fonctionner selon un des trois modes suivants : automatique, manuel et mixte.

Le corps d'une activité constitue la partie d'exécution d'une activité. Ce corps comporte une liste d'actions à exécuter sur la station de travail. L'ordre de ces activités n'est pas fixé et dépend de données de la procédure. Un corps d'activité comporte un identifieur et une liste d'actions Ai. Le couple [ProcedureId, ActivityId] identifie uniquement un corps d'activité lié à l'activité (ActivityId) qui appartient à la procédure dont l'identité est (ProcedureId). Une action N peut être activée par l'utilisateur sur le formulaire correspondant de l'écran de la station de travail (1). Cette action peut être scindée en deux parties : une première partie Ai qui est une commande (PreScript) à exécuter quand l'utilisateur veut sélectionner une action N (par exemple une initialisation) et une deuxième partie Zi qui est la commande (PostScript) à exécuter quand l'utilisateur veut valider l'action sélectionnée.

Les actions d'une activité sont numérotées de 0 à N. L'action A0 est une action particulière dans laquelle la commande (PreScript) de sélection est automatiquement exécutée et validée avant toute autre action.

Un préfixe PR de l'activité appelle un formulaire qui fournit l'interface de présentation et d'interaction de l'activité sur l'écran de la station.

La structure des données de l'activité est fournie par un fichier dont le nom est précédé du préfixe ADV. La syntaxe d'une action est constituée d'un champ "type d'action" (ActionType) d'un champ "nom d'action" (ActionName) et de plusieurs arguments qui sont des champs de vecteurs de données d'ouvrage (JDV) représentés par Ji et de vecteurs de données d'activité (ADV) représentés par Ai, ces champs sont stockés dans les vecteurs (ADV, JDV) de la mémoire (370) du serveur (3). Les actions peuvent être du type : exécutable, fonction DLL, échanges DDE... Le système de traitement transactionnel aide à définir, exécuter, coordonner et commander le flux de travail entre les organisations ou les groupes de travail en se basant sur une description des tâches de bureau qui peuvent être décrites comme des tâches structurées récurrentes, appelées procédures dont les éléments de travail de base sont appelés activités et doivent être exécutées par différents individus appelés acteurs selon une certaine séquence.

Un acteur consiste en une identification unique de l'acteur (usrid) fournie par le système, un nom d'acteur (name), un prénom de l'acteur (firstName), un mot unique d'ouverture de cession (loginName), un mot de passe (password) et une étiquette (alias).

Une procédure est un jeu prédéfini d'étapes de travaux selon une hiérarchisation partielle de ces étapes. Une étape de travail est formée d'une en-tête (identification, précédence,etc...) et d'un corps (activité) qui constitue le travail actuel à exécuter. Différentes étapes d'une procédure peuvent être exécutées par différentes personnes, différents groupes de personnes. Dans certains cas, plusieurs étapes d'une procédure peuvent être exécutées en même temps ou dans un ordre quelconque. En général, une procédure est un jeu partiellement ordonné d'étapes, c'est à dire dans lequel toutes les étapes ne doivent pas être nécessairement exécutées séquentiellement et dans lequel des boucles sont autorisées, plutôt qu'un jeu totalement ordonné. Les procédures ont de façon classique des attributs tels que le nom et la personne responsable associée à la procédure.

Un script est une spécification d'une procédure, d'une activité ou d'une partie automatique d'une activité manuelle.

Un ouvrage (job) est le lieu de commande pour une exécution particulière d'une procédure. Dans certains contextes l'ouvrage est appelé une transaction. Les ouvrages ont des paramètres tels que l'état, l'initiateur, l'historique.

Un rôle (rôle) consiste en la désignation d'un acteur ou d'un groupe d'acteurs qui agissent comme base pour les commandes d'accès et les commandes d'exécution. Cet acteur n'est pas forcément une seule personne et un acteur peut jouer plusieurs rôles d'acteur (Rôle Of Actor) dans une organisation. Un acteur est une personne, un programme ou une entité qui peut remplir les rôles à exécuter et être responsable de ces rôles ou être associé dans une certaine mesure avec les activités et procédure. Les attributs ou possibilités d'accès peuvent être associés avec les acteurs et avec les rôles.

Un rôle est défini par : un mot unique (rid) d'identification du rôle, le nom du rôle (name) et la description du rôle. Le rôle d'acteur comprend : l'identification de l'acteur (usrid) et l'identification du rôle (rid).

D'autres paramètres ou attributs et structures peuvent être associés pour créer un modèle organisationnel, destiné à améliorer le flux de travail.

L'ordonnanceur 30 assure la création d'un ouvrage et le travail de finalisation lorsque l'ouvrage est achevé, il vérifie tous les prédécesseurs de tous les possibles successeurs d'une activité achevée.

Le module ordonnanceur dialogue avec un module répartiteur (dispatcher 33) et un module signaleur 34 () et envoie au répartiteur un message qu'il dépose dans une boite à messages 35 pour indiquer qu'une nouvelle tâche a été créée en faisant figurer dans son message l'état "to dispatch".

Le module répartiteur a trois fonctions principales :
a) affecter à un utilisateur les tâches qui viennent d'être créées par l'ordonnanceur.
b) affecter à un autre utilisateur une tâche qui vient d'être rejetée.
c) effectuer la distribution et la circulation d'une activité parmi les utilisateurs.

Le module signaleur 34 conserve une trace des événements rythmés et signale les receveurs corrects au moment approprié.

Deux utilitaires de rythme sont également prévus dans le module signaleur. Le signaleur 34 reçoit également des informations du coordinateur 31 qui prend soin de ce qui se passe dans le système de gestion du flux de travail.

Le répartiteur 33 et le signaleur 34 échangent des signaux avec la boite de messages 35 qui conserve tous les messages asynchrones.

La boite de messages 35 est constituée principalement de deux tables de données, l'une appelée MSG-BOX-DESK qui contient la description des messages, la seconde appelée MSG-BOX-BROADCAST qui est utilisée pour mémoriser les destinataires des messages.

Cette boite à messages 35 reçoit également des signaux de l'administrateur 32. Cet administrateur 32 est utilisé en mode différé pour modeler, créer, tester et accorder les différentes entités du système de base, les procédures, activités, rôles et acteurs. Ce travail initial est effectué par une ou plusieurs personnes mettant en oeuvre techniquement le logiciel décrit ci-après, objet de l'invention.

Les modules 30 à 37 du serveur 3 communiquent à travers le système de communication comportant les éléments 36,2,17,16 avec un module client constitué par un ensemble de modules 10 à 15. Le système serveur 3 communique à travers un réseau 2 et un serveur réseau 364 avec un système client 1, comportant une interface de communication 17 et une architecture à quatre couches, dont la première est le système de messages de flux de travail 16, la seconde couche 14 est constituée par différents jeux d'interfaces de programme d'application client, une troisième couche de service de gestion 15, une quatrième couche 10,11 qui est la couche supérieure d'interface.

Pour plus de détail sur la constitution et le fonctionnement du dispositif serveur et du terminal, on pourra se référer plus largement à la demande de brevet intitulée "interface utilisateur pour système de traitement transactionnel déposée par BULL S.A. sous le numéro 92 06931.

Les différents éléments et en particulier l'administrateur servent comme on l'a explicité précédemment à créer un modèle, le tester, et accorder les différentes entités du système de base.

Cette étape peut impliquer l'analyse des structures organisationnelles, des flux d'informations, des procédures de bureau. Les activités "formulaire" et "structure de sécurité" doivent être créées.

Les scénaris de procédure sont écrits en utilisant le formalisme du logiciel de l'invention, qui consiste à créer un réseau de commande d'information (ICN) que nous allons décrire ci-après.

Ainsi, un exemple de procédure de bureau peut être une procédure simplifiée de contrôle financier sur un projet de recherche. Dans une telle procédure, le projet est envoyé par un candidat au secrétariat d'un service X qui procède à son enregistrement et à son passage en réunion de comité de décision. Ce projet revient au secrétariat du service X sous forme de proposition d'engagement et de projet de contrat non signé. Ces pièces sont visées par un responsable de secteur, puis photocopiées par sa secrétaire et envoyées à la comptabilité. Ensuite, d'une part arrive un ordre de paiement du candidat dont on vérifie la signature et le montant des factures, et d'autre part, arrive des situations comptables qui sont enregistrées. Le responsable du secteur peut alors effectuer son contrôle et viser les ordres de paiement et les envoyer à la comptabilité.

A partir de ces éléments, on peut donc définir les activités, les classer chronologiquement, et pour chaque activité définir l'acteur, les infos et le trajet des infos, en arrivée et en émission. Une telle définition figure en annexe 1 et 2 et les différentes activités sont : l'enregistrement du projet (1), l'approbation (2), la réception et la distribution (3), le visa (4), la photocopie et l'envoi (5), la réception et l'envoi de l'ordre de paiement (6), l'enregistrement des situations comptables (7), le retour au secrétariat (8), le contrôle (9), le visa des ordres de paiement (10).

Chaque activité est décomposée en ces éléments, ainsi si l'on prend la sixième activité "réception et envoi de l'ordre de paiement", l'acteur c'est la comptabilité, les infos arrivées sont constituées par la photocopie du dossier et proviennent du courrier comptabilité, les infos envoyées sont constituées par l'ordre de paiement visé et à destination du secrétariat du service X. Des activités telles que d'une part, la réception et l'envoi de l'ordre de paiement (6) et d'autre part l'enregistrement des situations comptables (7) sont effectuées en parallèle.

Une telle procédure peut être matérialisée à l'aide d'un logiciel de création d'un réseau de commande d'informations (ICN) permettant de réaliser un graphe comme nous le verrons par la suite.

A partir de ce graphe et des informations entrées par l'utilisateur, le système constituera les tables de données statiques ORGA-ACTOR, ORGA-ROLE, ORGA-R-OFF-ACT, JDV-PDDEF, qui permettront aux différents éléments du système, à partir de l'ordonnanceur par exemple, et des autres modules de constituer les informations des tables statiques telles que SCHED-PROCEDURES, SCHED-ACTIVITIES, SCHED-PRECEDENCES, et les tables dynamiques SCHED-JOBS, SCHED-STATEP, SCHED-STATUSP, SCHED-TASKP, JDV-JDV, ADV-ADV qui permettent aux différents éléments des modules de communiquer entre eux et d'échanger les informations nécessaires à l'exécution des tâches comme cela a été explicité dans la demande de brevet citée plus haut.

Le logiciel de définition et de représentation des procédures et activités peut être soit chargé au niveau de la station de travail 1 dans l'administrateur d'interface, soit disponible au niveau de l'administrateur 32 de la station serveur 3.

Ce logiciel coopère avec une souris ou tout autre moyen permettant l'activation de certaines zones de l'écran du terminal ou du serveur, à la suite d'événements extérieurs produits, par exemple dans le cas de la souris, par l'actionnement du bouton gauche qui permet la désignation, pour sélectionner par exemple un menu, ou positionner une figure, et dans le cas du bouton droit, l'annulation de la commande en cours.

Ces événements extérieurs provenant de la souris ou de tout autre matériel sont traités par une interface préprogrammée susceptible de reconnaître de tels événements, et des événements logiques tels que l'entrée du pointeur souris dans la fenêtre.

Par ailleurs, en complément de l'interface souris, on peut prévoir également une interface clavier programmée autant pour les touches de caractères que pour celles de contrôle et de pointeur.

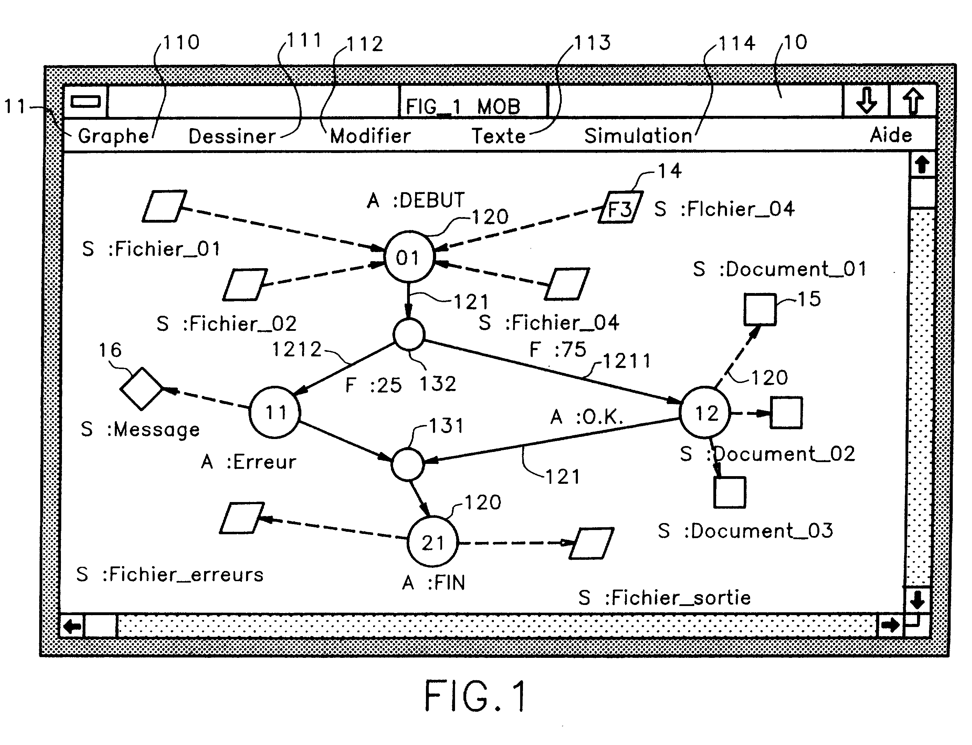

Le logiciel de représentation graphique de réseau d'informations de commande du type ICN permet de représenter des graphes tels que ceux de la figure 1, qui constitue des représentations de procédures.

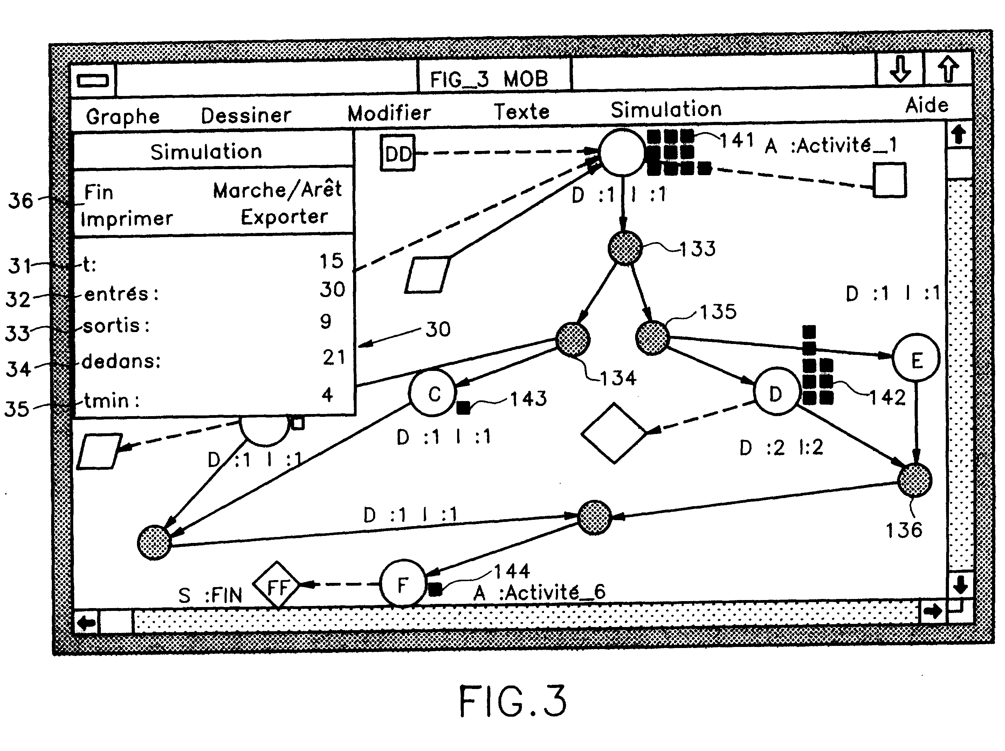

Ainsi dans le graphe de la figure 1, différentes activités représentées par les cercles de diamètre plus importants et numérotées 01,11,12,21 sont reliées entre elles par des arcs en traits pleins soit directement 121, soit 1211,1212,1213 par l'intermédiaire d'un branchement 131,132, qui peut être soit un ET-PUITS tel que celui 136 représenté à la figure 3, soit un ET-SOURCE 133, 134, 135, figure 3 dans le cas où les ronds représentant les branchements sont de couleurs foncées et dans le cas où les ronds sont vides, ce sont soit un OU-SOURCE (132 fig 1) soit un OU-PUITS (131, figure).

Une activité précédent un ET-SOURCE doit être terminée pour qu'une ou toutes les activités suivantes puissent commencer. De même, toutes les activités précédent un ET-PUITS doivent être accomplies pour pouvoir continuer la procédure. Les OU-PUITS indiquent que l'une quelconque des activités précédentes a été accomplie pour permettre la poursuite de la procédure. Les fréquences relatives d'exécution peuvent être indiquées sur le graphe à la suite de l'indicatif F comme représenté sur les arcs 1212, 1211 de la figure 1 reliant le OU-PUITS 132 respectivement aux activité (11,12). L'arc 1212 ayant une fréquence d'exécution de 25. Les activités élémentaires sont reliées également par des arcs pointillés (122) et orientés à l'aide d'une flèche tournée vers l'activité si les activités reçoivent les informations et en sens inverse si l'activité transmet les informations à des réceptacles qui permettent le stockage d'informations dont le type est différencié dans sa représentation. Ainsi, un réceptacle parallélogramme représente un fichier 14, un carré représente un document 15 et un losange 16 représente un message.

Une activité A figure 3 précédent un ET-SOURCE (133) doit être terminée pour qu'une ou toutes les activités suivant ce ET puissent commencer. De même toutes les activités précédents D, E précédent un ET-PUITS 136 doivent être accomplies pour pouvoir continuer la procédure.

Le logiciel fait apparaître lors de son lancement une fenêtre comportant la barre de menu 11 figure 1 qui permet de sélectionner une fonction parmi les fonctions présentées au menu, en amenant le marqueur de la souris sur la fonction à sélectionner et en cliquant avec le bouton gauche.

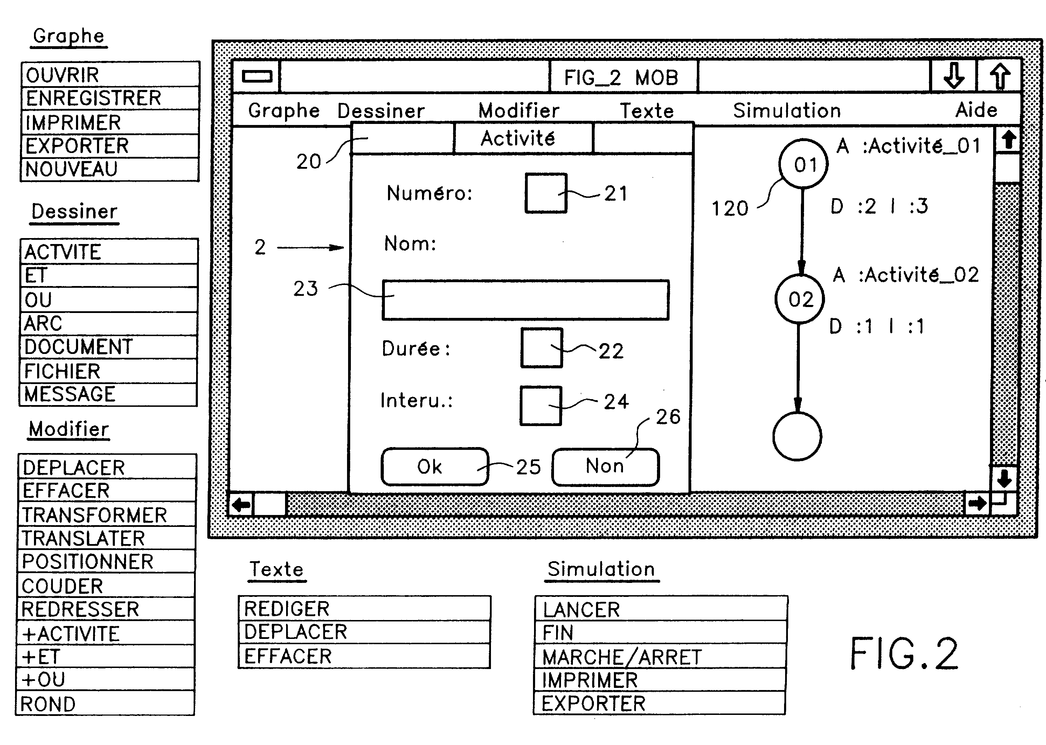

Ceci fait apparaître pour chaque fonction (110 à 114), une boite de listage présentant les commandes (figure 2) de la fonction sélectionnée. Ainsi, la fonction "Graphe" comporte les commandes, "OUVRIR" qui permet la lecture et l'affichage d'un graphe déjà stocké en mémoire, "ENREGISTRER" qui permet le stockage d'un graphe en mémoire sur disque, disquette ou cassette, "IMPRIMER" qui permet l'impression d'un graphe sur papier, "EXPORTER" qui permet la constitution d'un fichier adaptée à un type de logiciel donné, tel que par exemple le logiciel de dessin commercialisé sous la marque "DRAW", "REPEINDRE" qui permet le réaffichage correct du graphe sur l'écran, tel que toutes ces données ont été réellement définies à la suite de modifications, "NOUVEAU" qui permet l'initialisation d'un nouveau graphe avec nettoyage de l'écran.

La fonction "Dessiner" 111 permet d'appeler les commandes représentées à la figure 2 qui servent à créer et dessiner les différentes figures ou objets composant un graphe. Ainsi, la commande "ACTIVITE" lance une routine qui permet le dessin des activités appartenant au graphe après avoir positionné le curseur sur la case activité, et déclenché l'exécution par appui sur le bouton gauche de la souris pour que la commande devienne effective.

Un cercle (120, figure 1) représentant une activité est positionné par la flèche curseur de la souris et leur position définitive est fixée lors du cliquage du bouton gauche de la souris. Pour documenter les activités, il suffit de lancer la fonction "TEXTE" et la commande "REDIGER", un cercle représentant après avoir sélectionné une activité, en venant avec la flèche pointer celle-ci et en cliquant avec le bouton gauche.

Cette fonction "TEXTE" associée à la commande "REDIGER" pour une activité fait apparaître une boite de dialogue 2 représentée à la figure 2 dans laquelle une barre de titre 20 précise qu'il s'agit d'une activité, un pavé d'édition 21 permet de prendre en compte le numéro de l'activité, un deuxième pavé d'édition 23 permet de faire prendre en compte le nom de l'activité, un troisième pavé 22 permet de faire prendre en compte la durée de l'activité, un quatrième pavé 24 permet de faire prendre en compte l'intervalle.

Deux boutons de commande, un premier de validation 25 et un deuxième d'annulation 26 permettent de valider les informations qui ont été prises en compte dans le mode édition par l'utilisation du clavier ou de les invalider. Ceci permet ainsi pour chaque activité 120 de documenter celle-ci, comme représentée à la figure 2.

La commande "ET" de la fonction "Dessiner" figure 2 permet de lancer une routine assurant le dessin d'un symbole graphique représentant un ET qui peut être un PUIT ou une SOURCE.

La commande "OU" de la fonction "Dessiner" permet de lancer une routine assurant le dessin d'un symbole graphique représentant un OU.

La façon de procéder pour dessiner les OU et les ET est identique, il suffit de positionner le curseur de la souris sur la commande ET ou la commande OU selon le cas et de cliquer avec le bouton de décision de la souris. En déplaçant ensuite le curseur flèche à l'endroit voulu sur la fenêtre contenant les activités du graphe, il suffit ensuite de cliquer pour obtenir un ET à l'emplacement qui été indiqué par le curseur flèche.

La sélection de la commande "ARC" de la fonction "dessiner" permet en lançant la routine correspondante, le dessin des arcs qui vont relier les activités entre elles et les activités au réceptacle. Pour ce faire, l'utilisateur doit cliquer avec le bouton de décision, une première fois dans la figure de départ, et une deuxième fois dans la figure d'arrivée. Suivant la nature des figures reliées, l'arc sera en trait plein pour les liaisons entre deux activités ou en pointillé pour une liaison entre une activité et un réceptacle. Un arc en cours de construction dont l'arrivée n'est pas encore défini sera annulé en cliquant avec le bouton droit de la souris. L'utilisateur peut couder directement un arc en le traçant, il lui suffit pour cela de cliquer à l'endroit où il veut obtenir un angle.

Le nombre d'arc entrant ou d'arc sortant d'un élément ET ou d'un élément OU indiquera que les premiers sont du type SOURCE, alors que les seconds sont du type PUITS.

L'utilisation de la commande "REDIGER" de la fonction "Texte" permettra d'introduire les fréquences relatives en pourcentage sur chaque flux de contrôle après un OU-SOURCE.

Pour fixer la fréquence de passage des deux côtés d'une alternative déterminée par un OU, il suffit de cliquer sur l'un quelconque des deux arcs issus de la figure schématisant le OU par exemple l'arc 1211 de la figure 1, ce qui fait apparaître après avoir cliqué les commandes "TEXTE" et successivement "REDIGER" une boite de dialogue avec un seul champ à saisir qui est constitué par la fréquence en pourcentage de la fréquence de passage sur cet arc. Un bouton de commande OK fait disparaître la boite de dialogue et la fréquence saisie au clavier s'affiche à côté de l'arc lorsque ce bouton OK est cliqué.

La commande "DOCUMENT" de la fonction "Dessiner" permet après sa sélection le lancement d'une routine assurant la représentation d'un réceptacle de type document. La mise en place sur l'écran des réceptacles se fait de façon identique à celle des activités.

La sélection de la commande "FICHIER" de la fonction "Dessiner" permet le lancement d'une routine assurant la représentation d'un réceptacle de type fichier, et son positionnement à l'extrémité de la flèche curseur. La mise en place des fichiers se fait également comme pour les activités.

La sélection de la commande "MESSAGE" de la fonction "Dessiner" permet le lancement d'une routine assurant la représentation d'un réceptacle de type message et sa mise en place s'effectue comme pour les activités.

La sélection du menu "Texte rédiger" permet d'introduire les informations concernant les réceptacles, à savoir les noms et numéros des documents fichier ou message.

En cliquant sur un réceptacle choisi (par exemple 16, figure 1), après avoir cliquer les fonctions "texte rédiger", une boite de dialogue s'affiche en superposition du graphe avec le mot réceptacle comme en-tête. Cette boite de dialogue présente comme pour l'activité, un ensemble de champ permettant d'indiquer le nom, le numéro du réceptacle. Quand la saisie est validée par un clic sur la case OK, la boite de dialogue disparait et les informations apparaissent sur le graphe, en faisant figurer le numéro à l'intérieur de la figure qui schématise le réceptacle et le nom à côté de la figure schématisant le réceptacle. Ainsi, le réceptacle 14 porte le numéro F3 et le nom fichier 03.

La commande "DEPLACER" du menu de la fonction "Texte" permet de déplacer les informations qui ont été apportées relativement aux activités, aux réceptacles ou aux arcs. Pour déplacer un élément de texte, il faut d'abord cliquer sur celui-ci afin de le désigner ou sur la figure sur laquelle ce texte est rattaché, un rectangle noir apparait en superposition texte. C'est ce rectangle que l'utilisateur peut déplacer ensuite par un mouvement approprié de la souris, jusqu'au nouvel emplacement où il veut fixer le texte.

Si l'on désire valider le déplacement, il suffit de cliquer avec le bouton gauche de la souris pour voir le texte s'afficher à sa nouvelle position. Par contre, si l'on souhaite renoncer au déplacement, en cliquant le bouton droit de la souris, le déplacement est annulé et le texte revient automatiquement à sa position initiale.

La commande "EFFACER" de la fonction "Texte" permet de supprimer les informations qui ont été apportées relativement aux activités, réceptacles ou aux arcs.

Tous les noms d'activités ou de réceptacles peuvent être effacés du graphe en cliquant dessus, toutes les durées intervalles peuvent être effacées du graphe simultanément en cliquant dessus.

Les fréquences relatives à des arcs peuvent être effacées également en cliquant dessus. Il faut donc pour un graphe cliquer successivement sur chaque branche, ou utiliser la fonction "graphe repeindre".

Pour effacer ou modifier les numéros qui sont associés aux activités ou aux réceptacles, il faut utiliser la commande rédiger qui permet de travailler à partir de la boite de dialogue.

La barre de menu 11 comporte également une fonction "Modifier" 112, qui lorsqu'elle est sélectionnée par un clic sur le bouton gauche de la souris fait apparaître une succession de commandes : "déplacer", "effacer", "transformer", "translater", "positionner", "couder", "redresser", "+ activité", "+ ET", "+ OU", "- rond".

La commande "déplacer" permet le déplacement d'une figure comprenant des activités ou réceptacles avec les arcs et les textes qui sont liées à elle. Pour cela il faut d'abord désigner par un clic souris la figure à déplacer, après avoir sélectionné la commande "DEPLACER". Dans ce cas la figure s'efface pour laisser place à un petit carré noir qui se déplace avec la souris. Les arcs sont remplacés par des segments de droite élastique qui se meuvent en même temps que le curseur. Cette commande permet de repositionner l'ensemble figure, arc, texte. Lorsque le déplacement est validé avec la souris, la figure se redessine et tous les arcs qui la touchent se fixe. Si par contre on veut abandonner les modifications, un clic sur le bouton droit de la souris annule et repositionne automatiquement la figure à sa place initiale.

La commande "EFFACER" permet après sa sélection, l'effacement d'une figure désignée par un clic souris sur la figure. L'effacement s'effectue avec les arcs et les textes qui sont rattachés à la figure. Les réceptacles par contre doivent être détruits séparément. En ce qui concerne les arcs, il est possible de les effacer en cliquant sur l'arc souhaité.

La commande "TRANSFORMER" permet lorsqu'elle est sélectionnée de transformer un réceptacle d'un certain type (document, fichier ou message) en un réceptacle d'un autre type. Cette transformation s'effectue sur la figure à modifier qui est désignée par la flèche curseur de la souris et en cliquant avec le bouton gauche. La transformation intervient selon les règles logiques suivantes : un simple clic transforme un document en fichier, un fichier en message, un message en document. De cette façon, trois clics successifs restituent le réceptacle d'origine.

La commande "TRANSLATER" permet de lancer une routine qui va assurer le déplacement vertical de toute la partie du graphe située en dessous d'une ligne horizontale sans rompre les liens existants. La manipulation consiste à sélectionner une figure par un clic souris ce qui fait apparaître une ligne horizontale servant de référence. Le déplacement de la flèche curseur indiquera la position où la figure viendra se placer une fois un deuxième clic souris effectué. Avant d'effectuer ce deuxième clic, la commande peut être annulée en appuyant sur le bouton droit de la souris. Cette commande réalise les déplacements globaux de tous les objets situés en dessous de la ligne, y compris les réceptacles et les textes et permet d'aérer ou de rétrécir un graphe en hauteur.

La commande "POSITIONNER" permet de déclencher l'exécution d'une routine qui va assurer le déplacement de l'ensemble du graphe, en le translatant de façon quelconque dans les deux dimensions de l'écran sans le déformer pour le positionner ailleurs. Pour ce faire, le curseur est positionné sur une figure quelconque du graphe, puis après avoir cliqué avec le bouton gauche de la souris, l'utilisateur déplace le réticule qui vient d'apparaître, constitué de deux lignes perpendiculaires, en déplaçant la souris jusqu'à la position souhaitée. Un deuxième clic fixe l'endroit où viendra se positionner l'ensemble de la figure.

La commande "COUDER" permet de lancer une routine assurant le coudage d'un arc ou la modification de l'emplacement du coude. Pour se faire, il suffit de désigner avec le curseur l'arc choisi, puis de cliquer dessus à l'endroit où l'on veut le couder, ceci fait apparaître un segment coudé élastique que l'on déplace au moyen de la souris. Un deuxième clic permet de fixer la forme de l'arc. En cours de déplacement, on peut toujours annuler la commande par un clic sur le bouton droit de la souris.

La commande "REDRESSER" permet de lancer une routine qui assure le redressement d'un arc coudé. Pour se faire, il suffit de désigner avec le curseur l'arc choisi, puis de cliquer dessus avec le bouton de décision, ce qui fait revenir automatiquement l'arc coudé à un arc rectiligne.

La commande "+ ACTIVITE" permet de lancer une routine assurant l'introduction d'une activité supplémentaire sur le chemin d'un arc déjà existant. Pour ce faire, l'utilisateur désigne l'arc existant avec le curseur flèche, puis clique le bouton gauche de la souris pour faire apparaître une nouvelle activité sur cet arc. La figure crée se met à peu près au milieu de l'arc s'il est rectiligne, ou sur le coude si l'arc est courbé.

La commande "+ ET" permet de lancer une routine assurant l'introduction d'un ET supplémentaire sur le chemin d'un arc déjà existant. De même la commande "+ OU" permet de lancer une routine assurant l'introduction d'un OU supplémentaire sur le chemin d'un arc déjà existant.

Ces deux commandes fonctionnent selon le même principe que la commande "ACTIVITE", et il suffit de cliquer à l'aide de la souris l'arc sur lequel on veut ajouter un ET ou un OU.

La commande "- ROND" permet de lancer une routine assurant le retrait d'une activité, d'un OU, ou d'un ET du graphe et la reconstruction d'un arc. Pour ce faire, l'utilisateur désigne en cliquant avec le bouton gauche de la souris une activité située nécessairement sur le parcours d'un arc. Cette opération provoque l'élimination de l'activité avec reconstruction de l'arc seul. L'opération s'effectue de la même façon pour un ET ou un OU sauf qu'une telle opération ne peut pas marcher quand il y a au moins deux branches en entrée ou en sortie.

Enfin la barre de menu comporte une fonction "Simulation" 114 qui inclut les commandes "lancer", "fin", "marche/arrêt", "imprimer", "exporter".

Avant de lancer la simulation, il convient de s'assurer que toutes les activités ont été affectées de valeurs pour la durée et pour l'intervalle. Ces valeurs sont rentrées à l'aide de la fonction "texte rédiger" comme on l'a explicité précédemment. La durée constitue la durée de l'activité qui va intervenir dans une simulation et l'intervalle représente l'intervalle de temps minimum entre deux jetons traités successivement par la même activité.

Ainsi, on peut avoir, par exemple, une durée 5 et un intervalle 5, ce qui veut dire que l'activité peut traiter un jeton toutes les 5 unités de temps et elle le garde 5 unités pour le traiter. On peut également avoir, par exemple, une durée 5 et un intervalle 1 ce qui signifie que l'activité peut traiter un jeton par une unité de temps et garde ce jeton 5 unités de temps pour le traiter. On peut également avoir, par exemple, une durée de 5 et un intervalle de 15 signifiant que l'activité peut traiter un jeton toutes les 15 unités seulement et qu'elle nécessite 5 unités de temps pour traiter l'activité.

L'utilisateur choisira pour unité de temps conventionnel un délai qui lui permette d'exprimer avec la même unité toutes ces valeurs. Il pourra selon le cas choisir la journée, l'heure, la minute ou même la seconde.

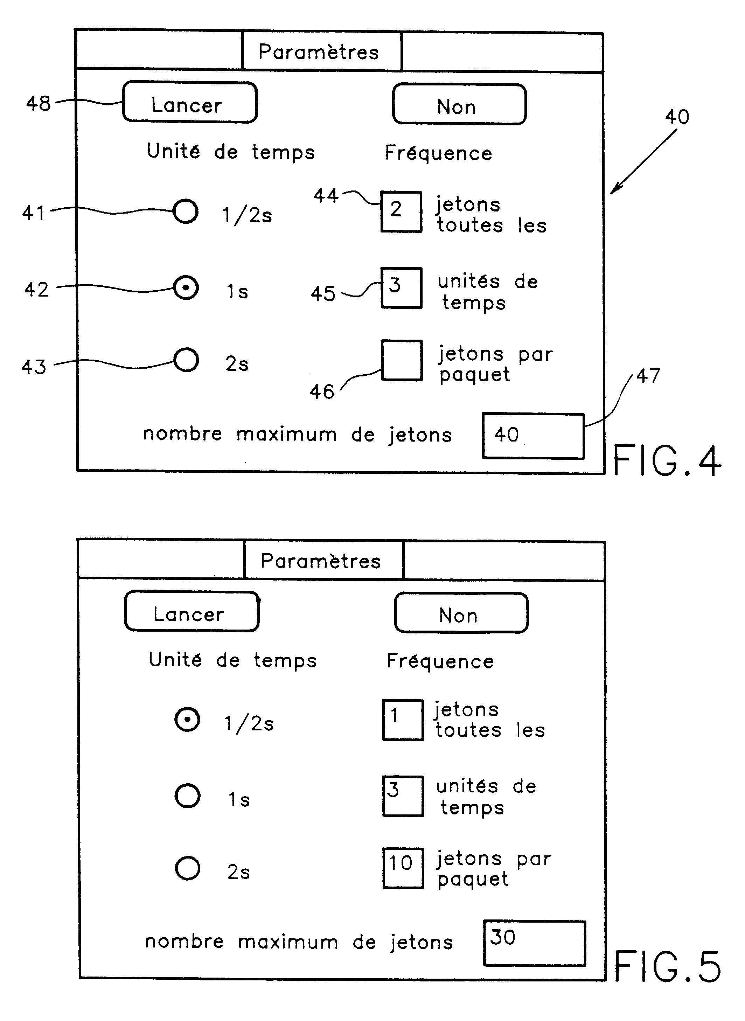

Lorsque l'utilisateur clique la fonction simulation avec le bouton de la souris, le programme fait apparaître une boite de dialogue 400 à l'écran qui permet à l'utilisateur de définir un certain nombres de paramètres répondant à son problème et conduisant à l'exécution d'une simulation déterminée. Le premier paramètre à fixer concerne l'unité élémentaire de- temps qui intervient dans la vitesse à laquelle la simulation va se dérouler sous les yeux de l'utilisateur. Il suffit cliquer sur la figure 4 un des trois boutons situés en face des trois options possibles, 1/2 seconde, 1 seconde ou 2 secondes. Ceci permet d'effectuer une simulation à une vitesse normale, en accélérée ou au ralenti. Le deuxième paramètre à définir est la fréquence d'entrée des jetons en remplissant un premier champ (44) représentant le nombre de jetons et un deuxième champ (45) représentant le nombre d'unité de temps au cours desquels le nombre des jetons est entré, exemple 2 jetons toutes les 3 unités de temps. Un troisième champ (46) permet de préciser si les jetons sont envoyés 1 par 1 ou par paquet et la grandeur du paquet. Ainsi, si dans ce troisième champ l'utilisateur a précisé que le paquet contenait 15 jetons, et qu'il a demandé préalablement 5 jetons par unité de temps, le système verra se présenter un paquet toutes les 3 unités de temps. Enfin un dernier champ (47) permet de définir le nombre de jeton maximum pour la simulation. Dans l'exemple indiqué, on se limite à 40 jetons et la simulation se poursuivra jusqu'à ce que les 40 jetons soient rentrés et ressortis après avoir parcouru le graphe.

Il suffit ensuite de cliquer le bouton de commande "Lancer" (48) de la boite de dialogue (40) pour lancer la simulation. Si par contre, le curseur de la souris est placé au dessus du bouton de commande (49) "non" et le bouton gauche de la souris est cliqué, la définition des paramètres est annulée.

Ainsi la figure 4 représente un premier exemple de paramètres introduits avant une simulation et la figure 5 représente un deuxième exemple de paramètres de simulation avec des envois de jetons par paquet.

Tant que la simulation n'est pas lancée, il est toujours possible d'en modifier les paramètres en cliquant sur les champs correspondants pour rentrer de nouvelles valeurs, ou même relancer cette simulation en cliquant la case "non". En cliquant sur la case (48) "lancer" de la boite de dialogue, les jetons commencent à circuler dans la procédure et dés le lancement de la simulation une petite fenêtre (30) figure 3 intitulée "simulation" apparait et affiche en permanence de façon dynamique un certain nombres d'informations qui sont dans un premier champ (31) le temps T écoulé en unités de temps, dans un deuxième champ "entrée" (32) le nombre de jetons entrés, dans un troisième champ "sortie" (33) le nombre de jetons sortis, dans un quatrième champ "dedans" (34) le nombre de jetons dans la procédure, dans un cinquième champ (35) le temps minimum "tmin" pour traverser la procédure.

En complément des informations ci-dessus, la fenêtre simulation (30) affiche simultanément dans une zone 36 un ensemble de quatres commandes permettant d'utiliser au mieux les résultats de la simulation.

Ces quatres commandes sont les commandes "fin", "marche/arrêt", "imprimer", "exporter".

Lorsque la simulation est en cours, la sélection de la commande "marche/arrêt" par un clic souris permet d'interrompre temporairement cette simulation et de figer le graphe avec les jetons où ils se trouvent à l'instant donné du cliquage comme représenté sur la figure 3 par les références 141, 142, 143, 144. Un deuxième clic sur cette commande relance la simulation.

La sélection de la commande "imprimer" après avoir préalablement arrêté la simulation par la commande "marche/arrêt" permet de récupérer et d'envoyer sur une imprimante l'ensemble du graphe figé avec ses jetons et les informations affichées sur la fenêtre.

Il est également possible d'exporter le graphe en sélectionnant la commande "exporter" de la fenêtre.

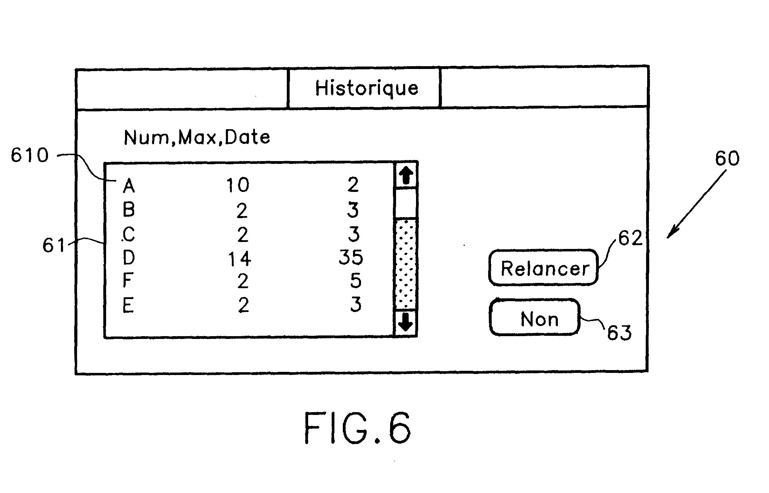

Pour arrêter complètement la simulation à n'importe quel moment de son exécution, il suffit de sélectionner la commande "fin" qui provoque l'affichage d'un historique dans une fenêtre telle que celle représenté à la figure 6.

Si la simulation s'est arrêtée naturellement par la circulation dans le graphe, du nombre maximum de jetons défini dans les paramètres, il faut quand même cliquer sur la commande "fin" pour afficher l'historique avant de pouvoir revenir au menu principal.

La fenêtre "Historique" (60) affiche dans une boite de listage (61) les informations pour toutes les activités du graphe. Chaque ligne (610) est consacrée à une seule activité et fournit dans l'ordre suivant : le numéro de l'activité, le nombre maximum de jetons qui se sont accumulés en file d'attente sur cette activité au cours de la simulation et le moment calculé en unité de temps à partir du lancement où ce maximum d'accumulation s'est produit. Ainsi pour l'activité A de début, le nombre maximum de jetons était de 10, et le moment était la deuxième unité de temps. La boite de listage (61) comporte un ascenseur vertical (611) permettant de visualiser d'autres activités. La fenêtre d'historique comporte également un bouton de commande "Relancer"(62) et un bouton de commande "Non" (63) qui permettent dans le cas où l'on vient cliquer sur le bouton "Non" de revenir au menu principal afin de travailler à nouveau sur le graphe en vue de l'améliorer ou de la modifier avant de lancer une nouvelle simulation.

Si l'on a pas exploité au mieux toutes les informations fournies au cours de la simulation, il est possible de la relancer de façon identique avec les mêmes paramètres en cliquant la case (62) "Relancer".

Lorsque l'on veut obtenir plus de précision dans une simulation relativement à une activité donnée, il est possible de sélectionner cette activité en cliquant sur la ligne correspondante, dans la fenêtre historique, par exemple ligne 610.

En cliquant ensuite sur la case relancer, la simulation s'exécute normalement à partir du début mais se trouve interrompu au temps indiqué correspondant au maximum de jetons sur l'activité choisie. Ceci permet d'obtenir une situation d'ensemble au moment d'un maximum et de l'imprimer si c'est nécessaire pour voir quelles peuvent être les modifications à apporter à la procédure.

Il est également possible de demander que la nouvelle simulation s'arrête plusieurs fois en sélectionnant plusieurs lignes dans la liste. Cela s'obtient en faisant des "Shift" clic, c'est à dire des clics souris avec la touche clavier "Shift" enfoncée. Ainsi l'utilisateur par l'usage de moyens décrit précédemment peut définir les procédures et les activités et ainsi constituer les informations, des tables statiques ORGA-ACTOR, ORGA-ROLES, ORGA-R-OFF-ACT, JDV-PDDEF.

### ANNEXE 1

### 1. Enregistrement d'un projet

. Acteur : secrétariat du service X
. infos arrivées : projet
. D'ou : candidat ( = réceptacle extérieur)
. Infos parties : numéro d'enregistrement
. Où : réceptacle A ( = interne permanent)

### 2. Approbation

. Acteur : comité de décision
. infos arrivées : projet, numéro d'enregistrement
. D'ou : réceptacle A
. Infos parties :
   - proposition d'engagement
   - projet de contrat non signé
. Où : courrier du secrétariat service X

### 3. Réception et Distribution

. Acteur : secrétariat du service X
. infos arrivées :
   - proposition d'engagement
   - projet de contrat non signé
. D'ou : courrier secteur X
. Infos parties : les mêmes
. Où : courrier du responsable de secteur.

### 4. Visa

. Acteur : responsable du secteur
. infos arrivées :
   - proposition d'engagement
   - projet de contrat non signé
. D'ou : courrier personnel
. Infos parties: visa de ces pièces
. Où : courrier secrétariat Y

### 5. Photocopie et envoi

. Acteur : secrétariat service Y
. infos arrivées : visa de la proposition d'engagement et du projet de contrat
. D'ou : courrier secteur Y
. Infos parties : pièces photocopies
. Où : courrier comptabilité

### ANNEXE 2

### 6. Réception et envoi ordre de paiement

. Acteur : comptabilité
. infos arrivées : photocopie du dossier
. D'ou : courrier comptabilité
. Infos parties : ordre de paiement visé
. Où : courrier du secrétariat du service X

### 7. Enregistrement des situations comptables

. Acteur : secrétariat du service X
. infos arrivées : listings
. D'ou : comptabilité
. Infos parties : numéro d'enregistrement
. Où : classement du secrétariat du service X = réceptacle A. interne permanent

Les activités 6 et 7 sont effectuées en parallèle. (Et les quelques activités qui les suivent doivent être réalisées toutes les 2 avant de pouvoir procéder à la suite de la procédure). Nous allons donc devoir ajouter les symboles "et-sources" et "et-puits". Le '"et-source" se placera entre les activités 5 et, 6 et 7.

### 8. Retour au secrétariat

. Acteur : secrétariat du service X
. infos arrivées : ordre de paiement signé, situation comptable, projet
. D'ou : comptabilité, réceptacle A
. Infos parties : ordre de paiement signé, situation comptable, projet
. Où : courrier du responsable de secteur

Le "et-puits" se placera ici

### 9. Contrôle

. Acteur : responsable secteur
. infos arrivées :
   - ordre de paiement
   - situation comptable, projet
. D'ou : secrétariat X
. Infos parties : contrôle du contrat final
. Où : comptabilité, réceptacle A

### 10. Visa des ordres de paiement

. Acteur: responsable secteur
. infos arrivées :
. D'ou :
. Infos parties : ordres de paiement visés
. Où : comptabilité candidat

## Revendications

1. Dispositif de conception de réseaux de commande d'informations pour la modélisation de tous processus caractérisé en ce que le dispositif considère le processus comme un jeu de procédures, ce jeu de procédures étant composé d'objets constitués d'activités à exécuter, de branchements ET-SOURCE (133) ou OU-SOURCE (132), ou de branchements ET-PUITS ou OU-PUITS, ces branchements reliant au moins une première activité à au moins une deuxième activité, ces objets définissant le processus à modéliser, chaque objet étant représenté par un symbole graphique différent, chaque symbole graphique étant accompagné d'attributs textuels et/ou d'autres informations, les informations étant représentées par des réceptacles pouvant être un fichier, un document, ou un message, la forme des réceptacles variant en fonction du type d'informations que les réceptacles contiennent, des liens logiques sont définis entre les objets, et entre les objets et les informations pour définir le modèle du processus sous forme d'un graphe, ce graphe reliant les activités entre elles, soit directement par des liaisons d'un premier type, soit par l'intermédiaire d'un branchement, les activités étant également reliées par des liaisons d'un deuxième type aux informations, les objets, les attributs textuels, les informations et les liens logiques étant destinées à être manipulés de façon interactive sur un écran graphique d'une station de travail.

2. Dispositif selon la revendication 1, caractérisé en ce que les objets sont constitués d'activités (120), de branchements ET-SOURCE (133), OU-SOURCE (132) desquels partent deux activités, ou de branchements ET-PUITS, OU-PUITS où aboutissent deux activités afin de simplifier l'utilisation et d'augmenter la rapidité du prototypage.

3. Dispositif selon la revendication 1, caractérisé en ce que les attributs sont le nom de l'acteur précisant une identité relative à la personne ou à l'entité qui accomplit l'activité, le nom de l'activité, le nom du type ou du lieu de stockage de l'information (réceptacle 14,15,16), la fréquence moyenne d'utilisation lorsqu'il y a un choix à faire entre plusieurs étapes de travail d'une procédure, le délai de réalisation (22) correspondant à chaque activité, un délai (24) représentant l'intervalle minimum qui doit s'écouler entre deux interventions successives de la même activité.

4. Dispositif selon la revendication 1, caractérisé en ce que le réceptacle associé à un message (16) est un losange.

5. Dispositif selon la revendication 1, caractérisé en ce que le réceptacle associé à un fichier (14) est un parallélogramme.

6. Dispositif selon la revendication 1, caractérisé en ce que le réceptacle associé à un document (15) est un carré.

7. Dispositif selon la revendication 2, caractérisé en ce qu'un branchement ET-SOURCE est destiné à lancer deux activités en parallèle à condition que l'activité précédent le ET-SOURCE soit terminée.

8. Dispositif selon la revendication 2 caractérisé en ce que un branchement ET-PUITS est destiné à attendre que toutes les activités précédent le ET-PUITS soient accomplies pour passer à l'activité suivante.

9. Dispositif selon la revendication 2 caractérisé en ce que un branchement OU-SOURCE est destiné à lancer une des deux activités possibles selon le choix effectué.

10. Dispositif selon la revendication 2 caractérisé en ce que un branchement OU-PUITS est destiné à lancer l'activité suivante si l'une quelconque des deux activités parallèles précédentes a été accomplie.

11. Dispositif selon l'une des revendications précédentes caractérisé en ce qu'il comprend des moyens d'élaborer le modèle du processus constitués par des fonctions "Dessiner" pour dessiner un graphe, "Modifier" pour transformer le graphe et "Texte" pour introduire les informations et les attributs textuels.

12. Dispositif selon la revendication 11 caractérisé en ce que la fonction "Modifier" permet d'appeler :
- une fonction "+ ACTIVITE" pour introduire une activité supplémentaire sur le chemin d'un arc,
- une fobction "+ ET" pour introduire un ET supplémentaire sur le chemin d'arc déjà existant,

13. Dispositif selon la revendication 11 ou 12 caractérisé en ce que la fonction "Modifier" permet d'appeler :
- une fonction "COUDER" pour couder un arc déjà dessiné,
- une fonction "REDRESSER" pour redresser un arc déjà coudé.
- une fonction "ROND" pour retirer une activité, un OU, ou un ET, et pour reconstruire un arc.

14. Dispositif selon l'une des revendications précédentes, caractérisé en ce qu'il comprend des moyens de lancer une simulation d'un traitement de processus.

15. Dispositif selon la revendication 12 ou 13 caractérisé en ce que la fonction "Dessiner" permet d'appeler les commandes :
- "ACTIVITE" assurant le dessin d'une activité ; "ET" pour dessiner un symbole graphique représentant un "ET", "OU" pour dessiner un symbole graphique représentant un "OU", "ARC" pour dessiner les flux d'enchaînement d'activités et de contrôle, ainsi que les flux représentant les circulations d'informations entre les différents réceptacles,
- "DOCUMENT" pour représenter un réceptacle du type document en entrée ou en sortie d'une activité ;
- "FICHIER" pour représenter un réceptacle du type fichier en entrée ou en sortie d'une activité ;
- "MESSAGE" pour représenter un réceptacle du type message en entrée ou en sortie d'une activité ;
- "TEXTE REDIGER" pour introduire le numéro, le nom des activités ou des réceptacles ainsi que les valeurs de durée et d'intervalle d'une activité ou les fréquences relatives en pourcentage sur chaque flux de contrôle après un ET-SOURCE.

16. Dispositif selon la revendication 14 caractérisé en ce que les moyens de simulation sont constitués par une fonction "Simulation" qui permet :
- par la sélection de la commande "LANCER" de commencer une simulation après la détermination d'un certain nombre de paramètres,

17. Dispositif selon la revendication 14 caractérisé en ce que les moyens de simulation sont constitués par une fonction "Simulation" qui permet :
- par la sélection de la commande "FIN" d'arrêter une simulation en cours avant achèvement normal et d'appeler un historique,

18. Dispositif selon la revendication 14 caractérisé en ce que les moyens de simulation sont constitués par une fonction "Simulation" qui permet :
- par la sélection de la commande "MARCHE/ARRET" d'interrompre temporairement une simulation en cours pour en visualiser les statistiques au moment de l'interruption et la reprendre au point où elle a été arrêtée.

19. Dispositif selon la revendication 17 caractérisé en ce que la commande "LANCER" permet de fixer les paramèters concernant :
- l'unité élémentarie de temps intervenant dans la vitesse de déroulement de la simulation,
- la fréquence d'entrée des jetons symbolisant l'avancement des activités,
- le choix de l'avancement des jetons par paquet ou individuellement.

20. Dispositif selon la revendication 17 caractérisé en ce que la commande "LANCER" permet de fixer les paramèters concernant le nombre maximum de jetons utilisé pour la simulation.

21. Dispositif selon la revendication 18, caractérisé en ce que la commande "MARCHE/ARRET" permet de visualiser : le temps écoulé, le nombre de jetons entrés, le nombre de jetons sortis, le nombre de jetons dans la procédure, le temps minimum pour traverser le procédure.

22. Dispositif selon la revendication 15 caractérisé en ce que les fonctions "ACTIVITE", "ET", "OU", "ARC", "FICHIER", "MESSAGE", "TEXTE REDIGER" permettent de documenter les tables statistiques d'un système de traitement transactionnel entre un serveur informatique et au moins une station de travail entre lesquelles les activités constituant les procédures sont exécutées par le système comportant du côté serveur un module ordonnanceur des tâches et des ouvrages associés aux activités, un module répartiteur pour effectuer la répartition des tâches, un module signaleur pour conserver une trace des événements rythmés et recevant des informations de l'ordonnanceur et d'un module coordinateur, une boîte de messages échangeant des signaux d'une part avec le module répartiteur et signaleur et d'autre part avec un module de communication avec les stations de travail et un module de gestion des données du flux de travail, le système comportant du coté station de travail une couche de communication, une couche de gestion des messages correspondant à un flux de travail, une couche comportant différents jeux d'interface de programmation de l'application, une couche de services de gestion et une couche d'interface utilisateur.

## Patentansprüche

1. Vorrichtung für den Entwurf von Informationssteuernetzen für die Gestaltung jeglichen Prozesses, dadurch gekennzeichnet, daß die Vorrichtung den Prozeß als einen Satz von Prozeduren betrachtet, wobei dieser Satz von Prozeduren aus Objekten aufgebaut ist, die aus auszuführenden Aktivitäten, aus UND-QUELLE (133) oder ODER-QUELLE (132)-Verzweigungen oder aus UND-SENKE- oder ODER-SENKE-Verzweigungen gebildet ist, wobei diese Verzweigungen wenigstens eine erste Aktivität mit wenigstens einer zweiten Aktivität verbinden, wobei diese Objekte den zu gestaltenden Prozeß definieren, wobei jedes Objekt durch ein verschiedenes graphisches Symbol dargestellt ist, wobei jedes graphische Symbol von Textattributen und/oder anderen Informationen begleitet wird, wobei die Informationen durch Behältnisse dargestellt sein können, die eine Datei, ein Dokument oder eine Nachricht sein können, wobei die Form der Behältnisse in Abhängigkeit vom Typ der Informationen, die die Behältnisse enthalten, unterschiedlich ist, zwischen den Objekten sowie zwischen den Objekten und den Informationen logische Verknüpfungen definiert sind, um das Modell des Prozesses in graphischer Form zu definieren, wobei dieser Graph die Aktivitäten entweder direkt durch Verbindungen eines ersten Typs oder über eine Verzweigung miteinander verbindet, wobei die Aktivitäten außerdem über Verbindungen eines zweiten Typs mit den Informationen verbunden sind, wobei die Objekte, die Textattribute, die Informationen und die logischen Verknüpfungen dazu vorgesehen sind, in interaktiver Weise auf einem Graphikbildschirm einer Arbeitsstation manipuliert zu werden.

2. Vorrichtung nach Anspruch 1, dadurch gekennzeichnet, daß die Objekte aus Aktivitäten (120), aus UND-QUELLE (133)- oder ODER-QUELLE (132)-Verzweigungen, von denen zwei Aktivitäten ausgehen, oder aus UND-SENKE- oder ODER-SENKE-Verzweigungen, an denen zwei Aktivitäten ankommen, gebildet sind, um die Verwendung zu vereinfachen und die Schnelligkeit der Prototypbildung zu erhöhen.

3. Vorrichtung nach Anspruch 1, dadurch gekennzeichnet, daß die Attribute der Name des Aktors, der eine Identität präzisiert, die auf die Person oder die Entität bezogen ist, die die Aktivität ausführt, der Name der Aktivität, der Name des Typs oder des Speicherortes der Informationen (Behältnis 14, 15, 16), die mittlere Nutzungshäufigkeit, wenn die Wahl zwischen der Ausführung mehrerer Arbeitsschritte einer Prozedur besteht, die Ausführungsverzögerung (22), die jeder Aktivität entspricht, und eine Verzögerung (24) sind, die ein minimales Intervall darstellt, das zwischen zwei aufeinanderfolgenden Eingriffen derselben Aktivität verstreichen muß.

4. Vorrichtung nach Anspruch 1, dadurch gekennzeichnet, daß das einer Nachricht (16) zugeordnete Behältnis ein Rhombus ist.

5. Vorrichtung nach Anspruch 1, dadurch gekennzeichnet, daß das einer Datei (14) zugeordnete Behältnis ein Parallelogramm ist.

6. Vorrichtung nach Anspruch 1, dadurch gekennzeichnet, daß das einem Dokument (15) zugeordnete Behältnis ein Quadrat ist.

7. Vorrichtung nach Anspruch 2, dadurch gekennzeichnet, daß eine UND-QUELLE-Verzweigung dazu vorgesehen ist, zwei Aktivitäten parallel zu starten, sofern die der UND-QUELLE vorhergehende Aktivität beendet ist.

8. Vorrichtung nach Anspruch 2, dadurch gekennzeichnet, daß eine UND-SENKE-Verzweigung dazu vorgesehen ist, auf die Ausführung sämtlicher der UND-SENKE vorhergehenden Aktivitäten zu warten, um zur folgenden Aktivität überzugehen.

9. Vorrichtung nach Anspruch 2, dadurch gekennzeichnet, daß eine ODER-QUELLE-Verzweigung dazu vorgesehen ist, eine von zwei möglichen Aktivitäten je nach ausgeführter Wahl zu starten.

10. Vorrichtung nach Anspruch 2, dadurch gekennzeichnet, daß eine ODER-SENKE-Verzweigung dazu vorgesehen ist, eine folgende Aktivität zu starten, falls irgendeine von zwei vorhergehenden parallelen Aktivitäten ausgeführt worden ist.

11. Vorrichtung nach einem der vorangehenden Ansprüche, dadurch gekennzeichnet, daß sie Mittel zum Erstellen des Modells des Prozesses enthält, die aus "Zeichnen"-Funktionen zum Zeichnen eines Graphen, "Modifizierungs"-Funktionen zum Umformen des Graphen sowie "Text"-Informationen zum Einführen der Informationen und der Textattribute gebildet sind.

12. Vorrichtung nach Anspruch 11, dadurch gekennzeichnet, daß die "Modifizierungs"-Funktion ermöglicht, folgende Funktionen aufzurufen:
- eine "+ AKTIVITÄT"-Funktion zum Einführen einer zusätzlichen Aktivität auf dem Weg eines Bogens,
- eine "+ UND"-Funktion zum Einführen eines zusätzlichen UND in den bereits vorhandenen Bogenweg.

13. Vorrichtung nach Anspruch 11 oder 12, dadurch gekennzeichnet, daß die "Modifizierungs"-Funktion ermöglicht, folgende Funktionen aufzurufen:
- eine "KRÜMMUNGS"-Funktion zum Krümmen eines bereits gezeichnete Bogens,
- eine "GERADERICHTUNGS"-Funktion zum Geraderichten eines bereits gekrümmten Bogens,
- eine "ABRUNDUNGS"-Funktion zum Zurücknehmen einer Aktivität, eines ODERs oder eines UND und zum Neukonstruieren eines Bogens.

14. Vorrichtung nach einem der vorangehenden Ansprüche, dadurch gekennzeichnet, daß sie Mittel zum Starten einer Simulation einer Prozeßverarbeitung enthält.

15. Vorrichtung nach Anspruch 12 oder 13, dadurch gekennzeichnet, daß die "Zeichnen"-Funktion ermöglicht, die folgenden Befehle aufzurufen:
- "AKTIVITÄT", der das Zeichnen einer Aktivität gewährleistet; "UND" zum Zeichnen eines graphischen Symbols, das ein "UND" darstellt, "ODER" zum Zeichnen eines graphischen Symbols, das ein "ODER" darstellt, "BOGEN" zum Zeichnen der Aktivitätenverknüpfungs- und Steuerflüsse, sowie der Flüsse, die die Informationszirkulationen zwischen den verschiedenen Behältnissen repräsentieren,
- "DOKUMENT" zum Darstellen eines Behältnisses des Typs Dokument am Eingang oder am Ausgang einer Aktivität;
- "DATEI" zum Darstellen eines Behältnisses des Typs Datei am Eingang oder am Ausgang einer Aktivität;
- "NACHRICHT" zum Darstellen eines Behältnisses des Typs Nachricht am Eingang oder am Ausgang einer Aktivität;
- "TEXT REDIGIEREN" zum Einführen der Nummer, des Namens der Aktivitäten oder der Behältnisse sowie der Werte der Dauer und des Intervalls einer Aktivität oder der relativen Häufigkeiten als Prozentsatz für jeden Steuerfluß nach einer UND-QUELLE.

16. Vorrichtung nach Anspruch 14, dadurch gekennzeichnet, daß die Simulationsmittel durch eine "Simulations"-Funktion gebildet sind, die
- durch die Wahl des Befehls "STARTEN" ermöglicht, eine Simulation nach der Bestimmung einer gewissen Anzahl von Parametern zu beginnen.

17. Vorrichtung nach Anspruch 14, dadurch gekennzeichnet, daß die Simulationsmittel durch eine "Simulations"-Funktion gebildet sind, die
- durch die Wahl des Befehls "ENDE" ermöglicht, eine momentan ablaufende Simulation vor der normalen Beendigung anzuhalten und eine Historie aufzurufen.

18. Vorrichtung nach Anspruch 14, dadurch gekennzeichnet, daß die Simulationsmittel durch eine "Simulations"-Funktion gebildet sind, die
- durch die Wahl des Befehls "FORTSETZEN/ANHALTEN" ermöglicht, eine momentan laufende Simulation vorübergehend zu unterbrechen, um die Statistiken zum Zeitpunkt der Unterbrechung anzuzeigen und sie an dem Punkt, an dem sie angehalten worden ist, wieder aufzunehmen.

19. Vorrichtung nach Anspruch 17, dadurch gekennzeichnet, daß der Befehl "STARTEN" ermöglicht, die folgenden Parameter zu fixieren, die
- eine elementare Zeiteinheit, die in die Ablaufgeschwindigkeit der Simulation eingeht,
- die Eingangsfrequenz der Tokens, die den Fortschritt der Aktivitäten symbolisieren, und
- die Wahl des Fortschritts der Tokens paketweise oder einzeln
betreffen.

20. Vorrichtung nach Anspruch 17, dadurch gekennzeichnet, daß der Befehl "STARTEN" ermöglicht, die Parameter zu fixieren, die die maximale Anzahl von Tokens, die für die Simulation verwendet werden, betreffen.

21. Vorrichtung nach Anspruch 18, dadurch gekennzeichnet, daß der Befehl "FORTSETZEN/ANHALTEN" ermöglicht, die verstrichene Zeit, die Anzahl eingegebener Tokens, die Anzahl ausgegebener Tokens, die Anzahl der Tokens in der Prozedur und die minimale Zeit zum Durchlaufen der Prozedur anzuzeigen.

22. Vorrichtung nach Anspruch 15, dadurch gekennzeichnet, daß die Funktionen "AKTIVITÄT", "UND", "ODER", "BOGEN", "DATEI", "NACHRICHT", "TEXT REDIGIEREN" ermöglichen, die statistischen Tabellen eines Transaktionsverarbeitungssystems zwischen einem Datenserver und wenigstens einer Arbeitsstation zu dokumentieren, zwischen denen die die Prozedur bildenden Aktivitäten durch das System ausgeführt werden, das auf seiten des Servers ein Modul für die Anweisung von Tasks oder Arbeiten, die den Aktivitäten zugeordnet sind, ein Verteilermodul zum Ausführen der Verteilung der Tasks, ein Meldemodul zum Aufbewahren einer Spur der getakteten Ereignisse, das die Informationen des Anweisers und eines Koordinationsmoduls empfängt, einen Nachrichtenkasten, der Signale einerseits mit dem Verteilermodul und dem Meldemodul und andererseits mit einem Modul für die Kommunikation mit den Arbeitsstationen austauscht, sowie ein Modul für das Management der Daten des Arbeitsflusses enthält, wobei das System auf seiten der Arbeitsstation eine Kommunkationsschicht, eine Nachrichtenmanagementschicht, die einem Arbeitsfluß entspricht, eine Schicht, die verschiedene Programmierungsschnittstellen-Gruppen der Anwendung enthält, eine Managementdienste-Schicht und eine Anwenderschnittstellenschicht enthält.

## Claims

1. Device for designing information control networks for the modelling of all processes characterised in that the device considers the process as a set of procedures, this set of procedures being composed of objects constituted of activities to be performed, of SOURCE-AND (133) or SOURCE-OR (132) branches, or SINK-AND (133) or SINK-OR (132) branches, these branches connecting at least one first activity to at least one second activity, these objects defining the process to be modelled, each object being represented by a different graphical symbol, each graphical symbol being accompanied by textual attributes and/or other information, the information being represented by receptacles, which can be a file, a document or a message, the form of the receptacles varying as a function of the type of information that the receptacles contain, logical links are defined between the objects, and between the objects and the information in order to define the model of the process in the form of a graph, this graph connecting together the activities, either directly by links of a first type, or via a branch, the activities also being connected by links of a second type to the information, the objects, textual attributes, information and logical links being intended to be handled interactively on a graphical screen of a work-station.

2. Device according to Claim 1, characterised in that the objects are constituted by activities (120), SOURCE-AND branches (133), SOURCE-OR (132) from which two activities leave, or SINK-AND, SINK-OR branches at which two activities arrive in order to simplify the use and to increase the speed of prototyping.

3. Device according to Claim 1, characterised in that the attributes are the name of the actor stating an identity relating to the person or the entity that is performing the activity, the name of the activity, the name of the type or the storage location of the information (receptacle 14, 15, 16), the average frequency of use when there is a choice to be made between several work-steps in a procedure, the performance time (22) corresponding to each activity, a period (24) representing the minimum interval that has to elapse between two successive occurrences of the same activity.

4. Device according to Claim 1, characterised in that the receptacle associated with a message (16) is a rhombus.

5. Device according to Claim 1, characterised in that the receptacle associated with a file (14) is a parallelogram.

6. Device according to Claim 1, characterised in that the receptacle associated with a document (15) is a square.

7. Device according to Claim 2, characterised in that a SOURCE-AND branch is intended to launch two activities in parallel, on the condition that the activity preceding the SOURCE-AND is finished.

8. Device according to Claim 2 characterised in that a SINK-AND branch is intended to wait until all the activities preceding the SINK-AND are finished before it goes on to the next activity.

9. Device according to Claim 2 characterised in that a SOURCE-OR branch is intended to launch one of the two possible activities according to the choice made.

10. Device according to Claim 2 characterised in that a SINK-OR branch is intended to launch the next activity if any one of the preceding two parallel activities has been finished.

11. Device according to one of the preceding claims characterised in that it comprises means for preparing the model of the process, which means are constituted by the functions "Draw" for drawing a graph, "Modify" for transforming the graph and "Text" for inserting information and textual attributes.

12. Device according to Claim 11 characterised in that the "Modify" function makes it possible to call up:
- a "+ ACTIVITY" function in order to introduce an additional activity on the path of an arc,
- a "+ AND" function in order to introduce an additional AND on the path of an arc already existing.

13. Device according to Claim 11 or 12 characterised in that the "Modify" function makes it possible to call up:
- a "BEND" function to bend an arc already drawn,
- a "STRAIGHTEN" function to straighten an arc that is already bent,
- a "ROUND" function to remove an activity, an OR, or an AND, and to reconstruct an arc.

14. Device according to one of the preceding claims, characterised in that it comprises means for launching a simulation of processing a process.

15. Device according to Claim 12 or 13 characterised in that the "Draw" function makes it possible to call up the commands:
- "ACTIVITY" assuring the drawing of an activity; "AND" to draw a graphical symbol representing an "AND", "OR" to draw a graphical symbol representing an "OR", "ARC" to draw activity- and control-chaining flows, and the flows representing the circulation of information between the various receptacles,
- "DOCUMENT" to represent a receptacle of the document type as an input or output of an activity;
- "FILE" to represent a receptacle of the file type as an input or output of an activity;
- "MESSAGE" to represent a receptacle of the message type as an input or output of an activity;
- "EDIT TEXT" to insert the number, the name of activities or receptacles as well as the duration and interval values of an activity or the relative frequencies as a percentage on each control flow after a SOURCE-AND.

16. Device according to Claim 14 characterised in that the simulation means are constituted by a "Simulation" function that makes it possible:
- by the selection of the "LAUNCH" command, to start a simulation after the determination of a number of parameters.

17. Device according to Claim 14 characterised in that the simulation means are constituted by a "Simulation" function that makes it possible:
- by the selection of the "END" command, to stop a simulation in progress before its normal finish and to call up a history.

18. Device according to Claim 14 characterised in that the simulation means are constituted by a "Simulation" function that makes it possible:
- by the selection of the "STOP/GO" command, to temporarily interrupt a simulation in progress in order to display the statistics at the time of the interruption and to resume it at the point where it was stopped.

19. Device according to Claim 17 characterised in that the "LAUNCH" command makes it possible to fix the parameters concerning:
- the elementary unit of time used in the speed of progress of the simulation;
- the input frequency of tokens symbolising the progress of activities;
- the choice of the advancement of the tokens in packets or individually.

20. Device according to Claim 17 characterised in that the "LAUNCH" command makes it possible to fix the parameters concerning the maximum number of tokens used for the simulation.

21. Device according to Claim 18, characterised in that the "STOP/GO" command makes it possible to display: the time elapsed, the number of incoming tokens, the number of outgoing tokens, the number of tokens in the procedure, the minimum time to pass through the procedure.

22. Device according to Claim 15 characterised in that the functions "ACTIVITY", "AND", "OR", "ARC", "FILE", "MESSAGE", "EDIT TEXT" make it possible to document the statistical tables of a transactional processing system between a computer server and at least one work-station between which the activities constituting the procedures are executed by the system comprising, on the server side, a scheduler module for the tasks and jobs associated with the activities, a distributor module for the distribution of tasks, a notifier module for keeping track of timed events and receiving items of information from the scheduler and from a co-ordinator module, a message box exchanging signals on the one hand with the distributor and notifier module, and on the other hand with a module for communicating with the work-stations and a work flow data management module, the system comprising, on the work station side, a communication layer, a message management layer corresponding to a work flow, a layer comprising different sets of application programming interfaces, a management services layer and a user interface layer.
